# EUROPÄISCHE PATENTSCHRIFT

(11) **EP 2 774 737 B1**
(45) Veröffentlichungstag und Bekanntmachung des Hinweises auf die Patenterteilung: **12.10.2016**
(21) Anmeldenummer: 14150538.8
(22) Anmeldetag: 09.01.2014
(51) Int. Cl.: B29B 13/08, B29D 30/00, B29D 30/38

(54) **VERFAHREN ZUR REDUZIERUNG DER KLEBRIGKEITSEIGENSCHAFTEN VON UNVULKANISIERTEN GUMMISTREIFEN**
METHOD FOR REDUCING THE ADHESIVE PROPERTIES OF UNVULCANIZED RUBBER STRIPS WITH REINFORCING ELEMENTS
PROCÉDÉ DE RÉDUCTION DES PROPRIÉTÉS D'ADHÉRENCE DE BANDES DE CAOUTCHOUC NON VULCANISÉES AVEC RENFORTS

(30) Priorität: 08.03.2013 DE 102013102304
(43) Veröffentlichungstag der Anmeldung: 10.09.2014
(73) Patentinhaber: Continental Reifen Deutschland GmbH, 30165 Hannover (DE)
(72) Erfinder: Schramm, Oliver, Dr., 31177 Harsum (DE)
(74) Vertreter: Widjaja, Wira

(56) Entgegenhaltungen:
- WO-A1-88/04988
- WO-A2-2008/105656
- DE-A1- 3 013 723
- DE-A1-102006 014 142
- GB-A- 1 448 532
- JP-A- 2005 205 656
- JP-A- 2006 347 093
- JP-A- 2007 099 088
- US-A- 4 202 717

## Beschreibung

Die Erfindung betrifft ein Verfahren zur Reduzierung der Klebrigkeitseigenschaften von unvulkanisierten Gummistreifen mit Festigkeitsträgern.

Bei der herkömmlichen Herstellung von Neureifen werden Vormaterialien bzw. bestimmte Reifenaufbauteile vorkonfektioniert. Zu diesen vorkonfektionierten Bauteilen gehört insbesondere auch das Spulbandagenrnaterial.

Beim Herstellen von Spulbandagenmaterial werden die Festigkeitsträger mit unvulkanisiertem Gummimaterial versehen und anschließend auf Wickelspulen aufgespult. Diese Wickelspulen werden anschließend im Allgemeinen zwischengelagert und dann für die Herstellung von Reifenrohlingen bereitgestellt. Ein Problem beim Auf- oder Abwickeln des Spulbandagenmaterials auf den Wickelspulen besteht darin, dass das bandförmige Spulbandagenmaterial aneinanderhaften kann. Dadurch kann es zu einem erheblichen Materialausschuss bei der Herstellung von Spulbandagenmaterial kommen. Der Materialausschuss kann auch dann entstehen, wenn das Spulbandagenmaterial wieder von der Wickelrolle abgerollt werden soll, um es dem Herstellungsprozess für die Reifenrohlinge zuzuführen.

Aus der GB 1 448 532 A ist ein Verfahren zur Herstellung eines pneumatischen Reifens bekannt, bei dem Reifenkomponenten, die ein vulkanisierbares elastomeres Material enthalten, teilvulkanisiert werden, bevor sie in den Reifen eingebracht werden. Diese partielle Vulkanisation kann derart durchgeführt werden, dass die betreffende Reifenkomponente mit 1 megarad bis 10 megarad einer Elektronenstrahlung bestrahlt wird. Die erwähnte Komponente kann die Karkasslage, der Laufstreifen oder eine Gürtellage sein. Aus der JP 2007 099088 A und der JP 2006 347093 A sind gummibeschichtete Festigkeitsträger, die für den Reifenaufbau verwendet und zwischengelagert werden, bekannt. Aus der DE 30 13 723 A1 ist es ferner bekannt, zum Vermindern der Oberflächenklebrigkeit vulkanisierbarer Kautschukartikel diese einer Laserstrahlung auszusetzen.

Der Erfindung liegt die Aufgabe zugrunde, ein Verfahren zu schaffen, mit dem Materialausschuss bei der Herstellung von Spulbandagenmaterial weitesgehend vermieden wird.

Gelöst wird die Aufgabe gemäß Anspruchs 1 mit einem Verfahren mit folgenden Schritten:
a) Herstellen von bandförmigen Spulbandagenmaterials mit einem kontinuierlichen Prozess,
   wobei die Festigkeitsträger auf der Unterseite und Oberseite mit Gummimaterial versehen werden,
b) Hindurchführen des bandförmigen Spulbandagenmaterials durch eine Bestrahlungsvorrichtung und kontinuierliche Bestrahlung des Spulbandagenmaterials mit einem Elektronenstrahlscanner,
   wobei das Spulbandagenmaterial eine Relativbewegung zum Elektronenstrahlscanner durchführt,
   *wobei auf das Spulbandagenmaterial eine Strahlendosis von mindestens 40 Kilo Gray, vorzugsweise 70 bis 150 Kilo Gray, aufgebracht wird und die auf das Spulbandagenmaterial aufgebrachte Strahlendosis über die Transportgeschwindigkeit eingestellt wird mit der sich das Spulbandagenmaterial durch die Bestrahlungsvorrichtung bewegt,*
c) Adsorption der Elektronenstrahlenergie durch das Spulbandagenmaterial,
   wodurch eine Vorvernetzung der obersten Materialschicht des Spulbandagenmaterials erreicht und dabei die Klebrigkeit der Oberfläche das Spulbandagenmaterial um mindestens 10 % des Ausgangswertes reduziert wird,
d) Weiterführung des bandförmigen Spulbandagenmaterials zu einer Wickelspule,
e) Kontinuierliches Aufwickeln des bandförmigen Spulbandagenmaterials auf der Wickelspule,
f) Bereitstellen des Spulbandagenmaterials auf Wickelspulen für die Herstellung von Fahrzeugreifen.

Ein Vorteil der Erfindung ist insbesondere darin zu sehen, dass durch das Verfahren die Klebrigkeit der Materialoberfläche des Spulbandagenmaterials wesentlich reduziert wird. Dadurch kommt es überraschenderweise nicht mehr zu den ungewünschten Gummimaterialanhaftungen beim Aufwickeln auf den Wickelspulen. Durch das Elektronenstrahlverfahren erfolgt auf einfache Weise eine sogenannte Vorvernetzung der obersten Materialschicht des Spulbandagenmaterials. Diese Vorvernetzung ist ausreichend einen Materialausschuss bei der Herstellung von Spulbandagenmaterial effektiv zu vermeiden.
Die Bestrahlung mit dem Elektronenstrahlscanner hat den Vorteil, dass der Bestrahlungsvorgang mit einer hohen Prozessgeschwindigkeit erfolgen kann. Das Verfahren kann außerdem auf eine einfache Weise in bestehende Prozesse zur Herstellung von Spulbandagenmaterial integriert werden. Bei dem erwähnten Wert für die Strahlendosis wird ein minimaler Wert für die Klebrigkeit der Materialoberfläche des Spulbandagenmaterial erzielt. Dieser Wert bzw. Wertebereich stellt somit eine optimale Strahlendosis dar, mit der das Spulbandagenmaterial behandelt werden sollte. Dadurch, dass bei Schritt b) die auf das Spulbandagenmaterial aufgebrachte Strahlendosis über die Transportgeschwindigkeit eingestellt wird mit der sich das Spulbandagenmaterial durch die Bestrahlungsvorrichtung bewegt, kann die Strahlendosis auf einfache Weise angepasst oder variiert werden.

In einer weiteren vorteilhaften Weiterbildung der Erfindung ist vorgesehen, dass die Vorrichtung zur Erzeugung der Elektronenstrahlung mit einer Energie von ca. 500 bis 1500 Kilo Elektronen-Volt betrieben wird.
Mit dieser Leistung kann die Bestrahlung mit einer hohen Effektivität auf das Spulbandagenmaterial aufgebracht werden.

In einer weiteren vorteilhaften Weiterbildung der Erfindung ist vorgesehen, dass bei Schritt b) mehrere Materialstreifen in Form von Spulbandagenmaterial parallel zueinander durch die Bestrahlungsvorrichtung transportiert werden, wobei der Elektronen-Strahl-Scanner die einzelnen Materialstreifen gleichzeitig bestrahlt.
Auf diese Weise wird die Prozessgeschwindigkeit zur Herstellung des Spulbandagenmaterials wesentlich beschleunigt.

In einer weiteren vorteilhaften Weiterbildung der Erfindung ist vorgesehen, dass bei Schutt a) das Herstellen des bandförmigen Spulbandagenmaterials mit einem Extruder und einer Zahnradpumpe erfolgt, wobei die parallel geführten Festigkeitsträger auf der Unterseite und Oberseite kontinuierlich mit Gummimaterial versehen werden. Bei diesem Herstellungsprozess werden die Festigkeitsträger direkt mit Gummimaterial versehen, wodurch die Oberfläche des Spulbandagenmaterials eine relativ hohe Klebrigkeit besitzt.

Anhand eines Ausführungsbeispiels soll die Erfindung näher erläutert werden. Es zeigen:
- Fig. 1:: ein Ausführungsbeispiel für das Verfahren,
- Fig. 2:: ein Ausführungsbeispiel in der Aufsicht.

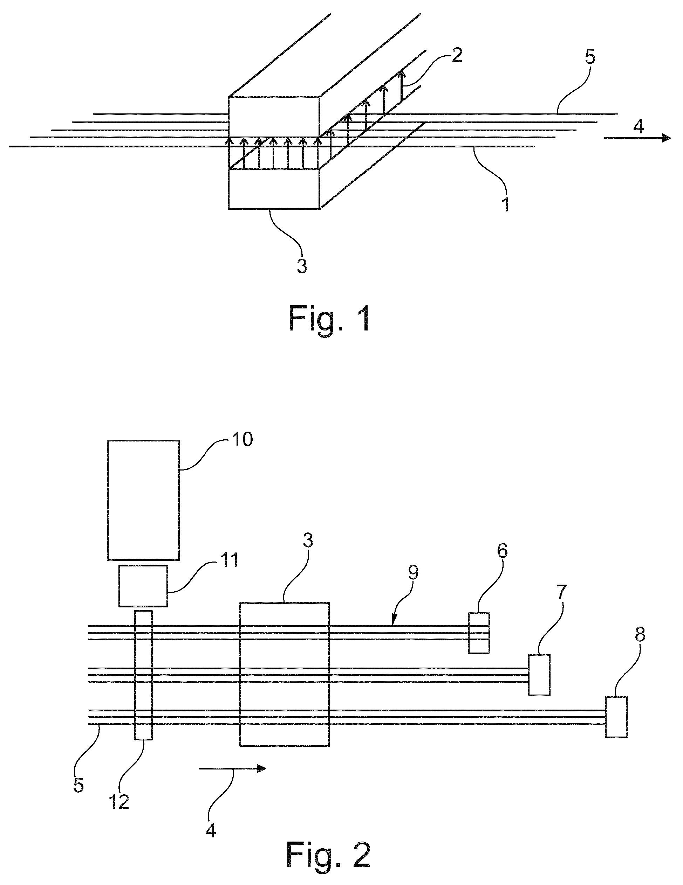

Fig. 1 zeigt ein Ausführungsbeispiel des Verfahrens. Das Spulbandagenmaterial 1 wird in Förderrichtung 4 durch den Elektronenstrahlscanner 3 hindurchgeführt. Zur vereinfachten Darstellung sind lediglich die Festigkeitsträger 5 des Spulbandagenmaterials dargestellt, die auf der Unter- und Oberseite jeweils mit einer nicht dargestellten Gummischicht versehen sind. Die Festigkeitsträger 5 des bandförmigen Spulbandagenmaterials 1 sind parallel zueinander angeordnet und verlaufen parallel zur Förderrichtung 4. Die Pfeile 2 zeigen die Elektronenstrahlung 2, die durch den Elektronenstrahlscanner 3 emittiert wird und auf der Materialoberfläche des Spulbandagenmaterials 1 eine Vorvernetzung des Gummimaterials erzeugt. Aufgrund der Vorvernetzung der obersten Materialschicht des Spulbandagenmaterials 1 wird die Klebrigkeit der Oberfläche des Spulbandagenmaterials 1 wesentlich reduziert. Die auf das Spulbandagenmaterial 1 aufzubringende Strahlendosis lässt sich unter anderem auf einfache Weise durch die Transportgeschwindigkeit einstellen, mit der das Spulbandagenmaterial 1 durch den Elektronenstrahlscanner 3 geführt wird.

Fig. 2 zeigt ein weiteres Ausführungsbeispiel in der Aufsicht. Die einzelnen Festigkeitsträger 5 kommen aus nicht dargestellten Vorratsspulen und werden in Förderrichtung 4 geführt. Mit dem Extruder 10 und der Zahnradpumpe 11 erfolgt eine direkte Gummierung der Festigkeitsträger 5 mit der Vorrichtung 12 zum Belegen der Festigkeitsträger 5 mit Gummimaterial auf der Ober- und Unterseite. Die Festigkeitsträger 5 sind bereits zu einzelnen Gruppen zusammengefasst und werden anschließend durch den Elektronenstrahlscanner 3 hindurchgeführt. Dabei erfolgt eine Adsorption der Elektronenstrahlenergie durch das Spulbandagenmaterial 9. Nach dem Durchführen des bandförmigen Spulbandagenmaterials durch den Elektronenstrahlscanner 3 besitzt das Material eine erheblich reduzierte Klebrigkeit. Anschließend werden die einzelnen Materialstreifen 9 auf die Wickelspulen 6, 7 und 8 aufgespult. Bei diesem Herstellungsprozess besitzt das aufgewickelte Spulbandagenmaterial bereits die Materialbreite, wie sie für den Einsatz an den Reifenaufbautrommeln zur Herstellung der Reifenrohlinge erforderlich ist. Das Spulbandagenmaterial wird auf den Wickelspulen im Allgemeinen zunächst zwischengespeichert und dann später dem Prozess zur Herstellung von Reifenrohlingen zugeführt.

### Bezugszeichenliste

### (ist Teil der Beschreibung)

- 1: Bandförmiges Spulbandagenmaterial
- 2: Elektronen-Strahlung
- 3: Elektronen-Strahl-Scanner
- 4: Förderrichtung des Spulbandagenmaterials
- 5: Festigkeitsträger im Spulbandagenmaterial
- 6: Wickelrolle
- 7: Wickelrolle
- 8: Wickelrolle
- 9: Spulbandagenmaterial nach der Bestrahlung bzw. einzelne Materialstreifen
- 10: Extruder
- 11: Zahradpumpe
- 12: Vorrichtung zum Belegen der Festigkeitsträger mit Gummimateualstreifen

## Patentansprüche

1. Verfahren zur Reduzierung der Klebrigkeitseigenschaften von unvulkanisierten Gummistreifen mit Festigkeitsträgern für den Einsatz als Spulbandagenmaterial (1) bei Fahrzeugreifen mit folgenden Schritten :
a) Herstellen von bandförmigen Spulbandagenmaterials (1) mit einem kontinuierlichen Prozess,
wobei die Festigkeitsträger (5) auf der Unterseite und Oberseite mit Gummimaterial versehen werden,
b) Hindurchführen des bandförmigen Spulbandagenmaterials (1) durch eine Bestrahlungsvorrichtung und kontinuierliche Bestrahlung des Spulbandagenmaterials mit einem Elektronenstrahlscanner (3),
wobei das Spulbandagenmaterial (1) eine Relativbewegung zum Elektronenstrahlscanner (3) durchführt,
*wobei auf das Spulbandagenmaterial (1) eine Strahlendosis von mindestens 40 Kilo Gray, vorzugsweise 70 bis 150 Kilo Gray, aufgebracht wird und die auf das Spulbandagenmaterial (1) aufgebrachte Strahlendosis über die Transportgeschwindigkeit eingestellt wird mit der sich das Spulbandagenmaterial (1) durch die Bestrahlungsvorrichtung bewegt,*
c) Adsorption der Elektronenstrahlenergie durch das Spulbandagenmaterial (1), wodurch eine Vorvernetzung der obersten Materialschicht des Spulbandagenmaterials erreicht und dabei die Klebrigkeit der Oberfläche das Spulbandagenmaterial (1) um mindestens 10 % des Ausgangswertes reduziert wird,
d) Weiterführung des bandförmigen Spulbandagenmaterials (1) zu einer Wickelspule,
e) Kontinuierliches Aufwickeln des bandförmigen Spulbandagenmaterials (1) auf der Wickelspule (6, 7, 8),
f) Bereitstellen des Spulbandagenmaterials (1) auf Wickelspulen (6, 7, 8) für die Herstellung von Fahrzeugreifen.

2. Verfahren nach einem der vorhergehenden Ansprüche,
**dadurch gekennzeichnet, dass**
die Vorrichtung zur Erzeugung der Elektronenstrahlung (2) mit einer Energie von ca. 500 bis 1500 Kilo Elektronen-Volt betrieben wird.

3. Verfahren nach einem der vorhergehenden Ansprüche,
**dadurch gekennzeichnet, dass**
bei Schritt b) mehrere Materialstreifen (9) in Form von Spulbandagenmaterial (1) parallel zueinander durch die Bestrahlungsvorrichtung transportiert werden, wobei der Elektronenstrahlscanner (3) die einzelnen Materialstreifen (9) gleichzeitig bestrahlt.

4. Verfahren nach einem der vorhergehenden Ansprüche,
**dadurch gekennzeichnet, dass**
die einzelnen Materialstreifen (9) nach der Bestrahlung gleichzeitig auf einzelne Wickelspulen (6, 7, 8) aufgewickelt werden.

5. Verfahren nach einem der vorhergehenden Ansprüche,
**dadurch gekennzeichnet, dass**
bei Schritt a) das Herstellen des bandförmigen Spulbandagenmaterials (1) mit einem Extruder (10) und einer Zahnradpumpe (11) erfolgt,
wobei die parallel geführten Festigkeitsträger (5) auf der Unterseite und Oberseite kontinuierlich mit Gummimaterial versehen werden.

## Claims

1. Method for reducing the adhesive properties of unvulcanized rubber strips with reinforcing elements for use as winding bandage material (1) in vehicle tyres having the following steps:
a) manufacturing strip-shaped winding bandage material (1) with a continuous process,
wherein the reinforcing elements (5) are provided with rubber material on the underside and upper side,
b) feeding the strip-shaped winding bandage material (1) through an irradiation device and continuously irradiating the winding bandage material with an electron beam scanner (3),
wherein the winding bandage material (1) carries out a relative movement with respect to the electron beam scanner (3),
wherein a beam dose of at least 40 Kilo Gray, preferably 70 to 150 Kilo Gray, is applied to the winding bandage material (1), and the beam dose which is applied to the winding bandage material (1) is set by means of the transportation speed with which the winding bandage material (1) moves through the irradiation device,
c) adsorbing the electron beam energy by means of the winding bandage material (1) as a result of which pre-cross-linking of the topmost material layer of the winding bandage material is achieved and at the same time the adhesiveness at the surface of the winding bandage material (1) is reduced by at least 10% of the initial value,
d) feeding the strip-shaped winding bandage material (1) further to a winding spool,
e) continuous wrapping of the strip-shaped winding bandage material (1) on the winding spool (6, 7, 8),
f) making available the winding bandage material (1) on the winding spools (6, 7, 8) for the manufacture of vehicle tyres.

2. Method according to one of the preceding claims, **characterized in that**
the device for generating the electron radiation (2) is operated with an energy level of approximately 500 to 1500 kilo electrons/volts.

3. Method according to one of the preceding claims, **characterized in that**
in step b) a plurality of material strips (9) in the form of winding bandage material (1) are transported in parallel with one another through the irradiation device,
wherein the electron beam scanner (3) simultaneously irradiates the individual material strips (9).

4. Method according to one of the preceding claims, **characterized in that**
the individual material strips (9) are simultaneously wound onto individual winding spools (6, 7, 8) after the irradiation.

5. Method according to one of the preceding claims, **characterized in that**
in step a) the strip-shaped winding bandage material (1) is manufactured with an extruder (10) and a gear pump (11),
wherein the reinforcing elements (5) which are guided in parallel are provided continuously with rubber material on the underside and upper side.

## Revendications

1. Procédé de réduction des propriétés d'adhérence de bandes de caoutchouc non vulcanisées avec des renforts pour l'utilisation en tant que matériau de frette bobinée (1) dans des pneus automobiles, comprenant les étapes suivantes :
a) la fabrication d'un matériau de frette bobinée en forme de bande (1) avec un procédé continu,
le renfort (5) étant muni d'un matériau de caoutchouc sur le côté inférieur et sur le côté supérieur,
b) le passage du matériau de frette bobinée en forme de bande (1) dans un dispositif d'exposition à un rayonnement et l'exposition continue du matériau de frette bobinée à un rayonnement avec un scanner à faisceau d'électron (3),
le matériau de frette bobinée (1) réalisant un mouvement relatif par rapport au scanner à faisceau d'électrons (3),
*une dose de rayonnement d'au moins 40 kilo Gray, de préférence* de 70 à *150 kilo Gray, étant appliquée sur le matériau* de *frette bobinée (1),* et *la dose de rayonnement appliquée sur le matériau de frette bobinée* (1) *étant ajustée par la vitesse de transport à laquelle le matériau* de frette *bobinée (1) se déplace dans le dispositif d'exposition à* un *rayonnement,*
c) l'adsorption de l'énergie du faisceau d'électrons par le matériau de frette bobinée (1), une pré-réticulation de la couche de matériau la plus supérieure du matériau de frette bobinée étant réalisée et l'adhérence de la surface du matériau de frette bobinée (1) étant réduite d'au moins 10 % de la valeur initiale,
d) le transfert du matériau de frette bobinée en forme de bande (1) sur une bobine d'enroulement,
e) l'enroulement continu du matériau de frette bobinée en forme de bande (1) sur la bobine d'enroulement (6, 7, 8),
f) la mise à disposition du matériau de frette bobinée (1) sur les bobines d'enroulement (6, 7, 8) pour la fabrication de pneus automobiles.

2. Procédé selon l'une quelconque des revendications précédentes, **caractérisé en ce que** le dispositif pour la génération du faisceau d'électrons (2) est exploité à une énergie d'environ 500 à 1 500 kilo électronvolt.

3. Procédé selon l'une quelconque des revendications précédentes, **caractérisé en ce que**, lors de l'étape b), plusieurs bandes de matériau (9) sous la forme d'un matériau de frette bobinée (1) sont transportées en parallèle les unes aux autres dans le dispositif d'exposition à un rayonnement, le scanner à faisceau d'électrons (3) exposant simultanément les bandes de matériau individuelles (9) à un rayonnement.

4. Procédé selon l'une quelconque des revendications précédentes, **caractérisé en ce que** les bandes de matériau individuelles (9) sont enroulées simultanément sur des bobines d'enroulement individuelles (6, 7, 8) après l'exposition à un rayonnement.

5. Procédé selon l'une quelconque des revendications précédentes, **caractérisé en ce que**, lors de l'étape a), la fabrication du matériau de frette bobinée en forme de bande (1) a lieu avec une extrudeuse (10) et une pompe à engrenages (11),
les renforts (5) introduits en parallèle étant muni d'un matériau de caoutchouc en continu sur le côté inférieur et sur le côté supérieur.
